# EUROPÄISCHE PATENTSCHRIFT

(11) **EP 0 483 559 B1**
(45) Veröffentlichungstag und Bekanntmachung des Hinweises auf die Patenterteilung: **28.08.1996**
(21) Anmeldenummer: 91117155.1
(22) Anmeldetag: 08.10.1991
(51) Int. Cl.: H04M 1/03, H04R 1/22

(54) **Handapparatekörper für Fernsprechendgeräte**
Handset structure for telephone sets
Structure de combiné pour postes téléphoniques

(30) Priorität: 30.10.1990 DE 9014981 U
(43) Veröffentlichungstag der Anmeldung: 06.05.1992
(73) Patentinhaber: SIEMENS AKTIENGESELLSCHAFT, 80333 München (DE)
(72) Erfinder: Andert, Tomas Jan, Dr.-Ing., W-4290 Bocholt (DE); Pieper, Stefan, Dipl.-Ing., W-4358 Haltern (DE)

(56) Entgegenhaltungen:
- EP-A- 0 354 520
- DE-B- 1 188 657
- DE-B- 1 261 888
- DE-U- 8 902 176
- US-A- 3 586 794

## Beschreibung

Die Erfindung betrifft einen Handapparatekörper für Fernsprechendgeräte mit je einer an den Schalldurchlaßöffnungen des Handapparatekörpers angekoppelten Sprech- und Hörkapsel gleicher Bauart, wobei die akustische Anpassung der Kapseln an den Betrieb als Hör- und Sprechkapsel durch separate Abstimmung der im Schallführungsbereich befindlichen Helmholtzresonatoren an den jeweiligen Betriebszustand erfolgt.

Die Umwandlung von Schallwellen in durch ein Fernsprechnetz übertragbare, elektrische Signale und umgekehrt erfolgt bei einem Handapparat für ein Fernsprechendgerät üblicherweise durch zwei elektroakustische, z. B. piezoelektrische Wandlerkapseln, die als Lautsprecher bzw. Mikrofon an der Hör- bzw. Sprechseite des Handapparates wirken. Neben der Güte der Wandlerkapseln selbst spielt auch die akustische Betriebsumgebung der Wandler eine entscheidende Rolle für die Qualität der Umwandlung. Während die Membran der als Mikrofon eingesetzten Kapsel über ein Freifeld, d. h. über den zwischen sich und der Schallquelle liegenden freien Raum, angeregt wird, sendet die Lautsprecherkapsel die erzeugten Schallwellen in ein durch den Hörkanal im Ohr des Fernsprechteilnehmers gebildetes und durch die Anlage des Handapparats an das Ohr annähernd abgeschlossenes Volumen aus. Die Betriebsumgebungen der beiden elektroakustische Wandler zeigen damit ein unterschiedliches Dämpfungs- und Resonanzverhalten, das sich in entsprechend unterschiedlichen akustischen Filtercharakteristiken der Schallführungsbereiche widerspiegelt. Um die Einhaltung des auf dem Fernsprechgebiet vorgegebenen Toleranzschemas für den Frequenzverlauf der Tonübertragung zwischen Schallquelle und Mikrofon bzw. Lautsprecher und Trommelfell eines Teilnehmers zu gewährleisten, ist daher jeweils die Abstimmung des aus Wandlerkapsel und Schallführungsbereich bestehenden akustischen Systems vonnöten.

Diese Abstimmung kann z. B. dadurch erfolgen, daß auf der Sprech- und Hörseite zwei in ihrer Bauart generell unterschiedliche, bereits von vorneherein auf die jeweilige Betriebsart als Mikrofon bzw. Lautsprecher angepaßte Wandler benutzt werden.
Dagegen ist durch die DE-AS 1 261 888 ein Handapparat für Fernsprechendgeräte offenbart, bei dem Sprech- und Hörkapseln gleicher Bauart eingesetzt werden, wobei zur Beeinflussung des Frequenzganges an der Sprech- und Hörseite verschieden abgestimmte Resonanzräume (sog. Helmholtzresonatoren) zwischen der Membran der Wandlerkapsel und der Einspracheöffnung bzw. Hörmuschel ausgebildet sind. Wie z. B. aus DE-AS 1 188 657 hervorgeht, wird dabei meist ein ganzes System aus mehreren solcher Helmholtzresonatoren, die miteinander akustisch gekoppelt sind und als frequenzabhängige Dämpfungs- oder Verstärkungsglieder wirken, eingesetzt, um insgesamt den gewünschten Frequenzgang im jeweiligen Schallführungsbereich zu erzielen. Die dafür erforderlichen konstruktiven Maßnahmen bedingen jedoch einen nicht vernachlässigbaren, zusätzlichen Design- und Fertigungsaufwand sowie einen erhöhten Raumbedarf im Inneren des Handapparates.

Die Aufgabe der Erfindung besteht daher darin, einen Handapparatekörper für Fernsprechendgeräte auszubilden, der mit zwei elektroakustischen Wandlern gleicher Bauart ausgestattet ist, wobei der Aufwand für die akustische Anpassung der Wandler an ihre jeweilige Betriebsumgebung, insbesondere auf der Hörseite, unter Einhaltung des auf dem Fernsprechgebiet vorgegebenen Toleranzschemas verringert wird.

Erfindungsgemäß wird die Aufgabe durch einen Handapparatekörper für Fernsprechendgeräte gelöst, der die im Kennzeichen des Patentanspruchs 1 angegebenen Merkmale aufweist.

Die Lautsprecherkapsel liegt dabei fast unmittelbar hinter den Schalldurchlaßöffnungen des Handapparategehäuses an, so daß das dazwischen liegende Volumen in seiner Resonatorwirkung vernachlässigbar bleibt. Damit entfällt eine aufwendige konstruktive Ausbildung des Schallführungsbereiches auf der Hörseite, wodurch sich neben Kosteneinsparungen auch eine besonders raum- und gewichtsparende, flache Bauweise als Vorteil ergibt.

Auf der Sprechseite ist es zweckmäßig, daß der Helmholtzresonator durch Vergrößerung des zwischen der Gehäuseinnenseite des Handapparatekörpers und der Sprechkapsel befindlichen Volumens sowie durch die benachbarten Schalldurchlaßöffnungen des Handapparatekörpers gebildet ist.

Zur Erweiterung des Übertragungsbereiches kann es zweckmäßig sein, daß die Resonanzfrequenz des Deckels der jeweiligen Wandlerkapsel in den für den Fernsprechbetrieb genutzten Übertragungsbereich verlegt ist.

Dies gilt für die Hör- und Sprechkapsel des Handapparatekörpers, da Wandler gleicher Bauart Verwendung finden sollen.

Vorteilhaft ist es, daß zur Erzielung einer wirksamen Resonanz des Kapseldeckels der Kapseldeckel eine hohe Steifigkeit aufweist. Dies kann durch eine größere Masse des Deckels sowie durch Versteifungsrippen erreicht werden.

Um im vorgegebenen Toleranzschema zu bleiben, kann es vorkommen, daß die Ausspracheresonanz bedämpft werden muß. Daher kann es zweckmäßig sein, daß zur Bedämpfung der Ausspracheresonanz eine akustische Impedanz vor den Schalldurchlaßöffnungen der Hörkapsel angeordnet ist.

Diese akustische Impedanz kann vorteilhafterweise durch einen schmalen Spalt zwischen der Innenseite des Handapparatekörpers und dem Deckel der Hörkapsel gebildet sein. Der Spalt kann durch die beiden aneinanderliegenden Teile, nämlich Hörkapseloberfläche und Innenseite des Handapparatekörpers gebildet sein, da auf besondere Abdichtungsmaßnahmen verzichtet wird. Es ist jedoch auch möglich, daß die akustische Impedanz durch poröses Material (Filz, Vlies, Seide) gebildet ist.

Im folgenden sei die Erfindung anhand einer Abbildung näher erläutert.

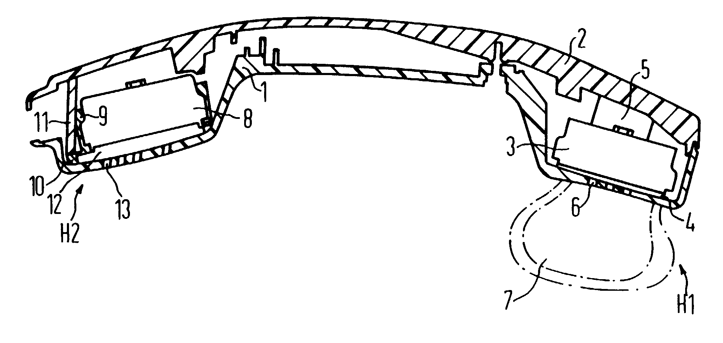

Die Abbildung zeigt einen Handapparatekörper für Fernsprechgeräte im Schnitt.

Der Handapparatekörper ist zweiteilig und besteht aus einer Handapparateunterschale 1 sowie aus einer Handapparateoberschale 2, die miteinander durch hier nicht näher bezeichnete Maßnahmen verbunden sind. Zwischen den Schalen befinden sich in den beiden Endbereichen jeweils ein Wandler. Auf der Hörerseite ist eine Wandlerkapsel angeordnet, die die Hörkapsel 3 bildet. Die Hörkapsel weist an der die Schalldurchlaßöffnungen aufweisenden Seite einen umlaufenden Ring 4 auf, der an der Innenseite der Handapparteunterschale anliegt. Durch die Anlage dieser Teile ergibt sich ein kleiner Spalt von etwa 0,3 mm, der die akustische Impedanz zur Bedämpfung der Ausspracheresonanz bildet. Gehalten wird der Wandler durch ein blockförmiges elastisches Teil 5, das so bemessen ist, daß der Wandler im zusammengefügten Zustand der Handapparateschalen in seiner Lage fixiert ist. Im Bereich der Hörkapsel weist die Handapparateunterschale Schalldurchlaßöffnungen 6 auf, die mit einem Volumen 7 gekoppelt sind. Dieses Volumen stellt das menschliche Ohr dar und bildet zusammen mit den Schalldurchlaßöffnungen einen Helmholtzresonator H1.

Am anderen Ende des Handapparatekörpers befindet sich das Mikrofon 8. Dieses ist in einem Haltekörper 9 gelagert. Der Haltekörper 9 weist in seinem Randbereich mehrere elastische Lappen 10 auf, auf die im Oberteil des Handapparatekörpers befindliche Stege 11 einwirken, so daß diese Lappen im zusammengebauten Zustand des Handapparatekörpers fest an der Innenseite der Handapparateunterschale anliegen, so daß eine akustisch dichte Verbindung zwischen Mikrofon und Innenseite der Unterschale hergestellt wird. Der Haltekörper 9 ist nun so geformt, daß zwischen der Innenseite der Handapparateunterschale und der Mikrofonkapsel ein Volumen 12 entsteht. Dieses Volumen 12 stellt zusammen mit den Schalldurchlaßöffnungen 13 einen zweiten Helmholtzresonator H2 dar.

## Patentansprüche

1. Handapparatekörper für Fernsprechendgeräte mit je einer an den Schalldurchlaßöffnungen des Handapparatekörpers angekoppelten Sprech- und Hörkapsel gleicher Bauart, wobei die akustische Anpassung der Kapseln an den Betrieb als Hör- und Sprechkapsel durch separate Abstimmung der im Schallführungsbereich befindlichen Helmholtzresonatoren (H1, H2) an den jeweiligen Betriebszustand erfolgt,
**dadurch gekennzeichnet,**
daß der Helmholtzresonator (H1) auf der Hörerseite allein durch Ausnutzung des Ohrvolumens des Fernsprechteilnehmers sowie der Schalldurchlaßöffnungen (6) des Handapparatekörpers gebildet ist.

2. Handapparatekörper nach Anspruch 1,
**dadurch gekennzeichnet,** daß der Helmholtzresonator (H2) auf der Sprechseite durch Vergrößerung des zwischen Gehäuseinnenseite des Handapparatekörpers und der Sprechkapsel (8) befindlichen Volumens (12) sowie durch die benachbarten Schalldurchlaßöffnungen (13) des Handapparatekörpers gebildet ist.

3. Handapparatekörper nach Anspruch 1 oder 2,
**dadurch gekennzeichnet**, daß die Resonanzfrequenz des Deckels der jeweiligen Kapsel in den für den Fernsprechbetrieb genutzten Übertragungsbereich verlegt ist.

4. Handapparatekörper nach Anspruch 3,
**dadurch gekennzeichnet**, daß zur Erzielung einer wirksamen Resonanz des Deckels der Deckel eine hohe Steifigkeit aufweist.

5. Handapparatekörper nach einem der vorstehenden Ansprüche,
**dadurch gekennzeichnet,** daß zur Bedämpfung der Ausspracheresonanz eine akustische Impedanz vor den Schalldurchlaßöffnungen (6) der Hörkapsel (3) angeordnet ist.

6. Handapparatekörper nach Anspruch 5,
**dadurch gekennzeichnet**, daß die akustische Impedanz durch einen schmalen Spalt zwischen der Innenseite des Handapparatekörpers und dem Deckel der Hörkapsel gebildet ist.

7. Handapparatekörper nach Anspruch 5,
**dadurch gekennzeichnet,** daß die akustische Impedanz durch poröses Material (Filz, Vlies, Seide) gebildet ist.

## Claims

1. Handset structure for telephone sets, each having a microphone capsule and receiver capsule, coupled to the sound openings of the handset structure, of the same design, the acoustic adaptation of the capsules to operation as a receiver capsule and microphone capsule being carried out by separately matching the Helmholtz resonators (H1, H2), located in the sound conduction area, to the respective operating state, characterized in that the Helmholtz resonator (H1) on the receiver side is formed solely by utilizing the ear volume of the telephone subscriber and the sound openings (6) of the handset structure.

2. Handset structure according to Claim 1, characterized in that the Helmholtz resonator (H2) on the microphone side is formed by increasing the volume (12) between the inside of the housing of the handset structure and the microphone capsule (8) and by means of the adjacent sound openings (13) of the handset structure.

3. Handset structure according to Claim 1 or 2, characterized in that the resonant frequency of the lid of the respective capsule is transposed into the transmission area utilized for telephone operation.

4. Handset structure according to Claim 3, characterized in that, in order to achieve an effective resonance of the lid, the lid has a high degree of rigidity.

5. Handset structure according to one of the preceding claims, characterized in that, in order to damp the pronunciation resonance, an acoustic impedance is arranged upstream of the sound openings (6) of the microphone capsule (3).

6. Handset structure according to Claim 5, characterized in that the acoustic impedance is formed by a narrow gap between the inside of the handset structure and the lid of the receiver capsule.

7. Handset structure according to Claim 5, characterized in that the acoustic impedance is formed by means of porous material (felt, nonwoven fabric, silk).

## Revendications

1. Corps de combiné de terminaux téléphoniques, comprenant une capsule de microphone et une capsule d'écouteur, qui sont couplées aux ouvertures de passage du son du corps de combiné téléphonique et qui sont de structure du même type, l'adaptation acoustique des capsules au fonctionnement en tant que capsule de microphone et capsule d'écouteur s'effectuant par accord distinct des résonateurs (H1, H2) de Helmholtz se trouvant dans la zone de guidage du son à l'état de fonctionnement considéré,
caractérisé en ce que
le résonateur (H1) de Helmholtz du côté de l'écouteur est formé seulement en utilisant le volume de l'oreille de l'abonné au téléphone ainsi que les ouvertures (6) de passage du son du corps de combiné téléphonique.

2. Corps de combiné téléphonique suivant la revendication 1, caractérisé en ce que le résonateur (H2) de Helmholtz du côté microphone est formé par agrandissement du volume (12) compris entre le côté intérieur du boîtier du corps de combiné téléphonique et la capsule (8) de microphone ainsi que par les ouvertures (13) voisines de passage du son du corps de combiné téléphonique.

3. Corps de combiné téléphonique suivant la revendication 1 ou 2, caractérisé en ce que la fréquence de résonance du couvercle de chaque capsule est dans le domaine de transmission utilisé pour l'exploitation téléphonique.

4. Corps de combiné téléphonique suivant la revendication 3, caractérisé en ce que pour obtenir une résonance efficace du couvercle, le couvercle a une grande rigidité.

5. Corps de combiné téléphonique suivant l'une des revendications précédentes, caractérisé en ce que pour atténuer la résonance due aux paroles prononcées, une impédance acoustique est disposée devant les ouvertures (6) de passage du son de la capsule (3) d'écouteur.

6. Corps de combiné téléphonique suivant la revendication 5, caractérisé en ce que l'impédance acoustique est formée par un intervalle étroit entre le côté intérieur du corps de combiné téléphonique et le couvercle de la capsule d'écouteur.

7. Corps de combiné téléphonique suivant la revendication 5, caractérisé en ce que l'impédance acoustique est formée par un matériau poreux (feutre, voile, soie).
